# EUROPEAN PATENT SPECIFICATION

(11) **EP 4 620 341 B1**
(45) Date of publication and mention of the grant of the patent: **15.04.2026**
(21) Application number: 25162250.2
(22) Date of filing: 07.03.2025
(51) Int. Cl.: A43B 1/00, A43B 13/06, A43B 13/12, B29D 35/08, B29D 35/12

(54) **METHOD OF MAKING OF A COLOURED LEATHERETTE ON A LEATHER SOLE BY INJECTION AND RELATED PRODUCT**
VERFAHREN ZUR HERSTELLUNG EINES FARBIGEN KUNSTLEDERS AUF EINER LEDERSOHLE DURCH INJEKTION UND ZUGEHÖRIGES PRODUKT
PROCÉDÉ DE FABRICATION D'UN SIMILICUIR COLORÉ SUR UNE SEMELLE EN CUIR PAR INJECTION ET PRODUIT ASSOCIÉ

(30) Priority: 19.03.2024 IT 202400006073
(43) Date of publication of application: 24.09.2025
(73) Proprietor: FA.I.T. ADRIATICA S.p.A., 47043 Gatteo (FC) (IT)
(72) Inventor: MURATORI, Antonio, 47043 Gatteo (RN) (IT); BELLUCCI, Luca, 47923 Rimini (RN) (IT); FABBRI, Fabio, 47025 Mercato Saraceno (FC) (IT)
(74) Representative: Montebelli, Marco

(56) References cited:
- EP-A1- 3 815 892
- CN-Y- 200 947 851
- KR-Y1- 200 469 584

## Description

The invention concerns a method for making a colored leatherette on a leather sole by injection and the related product.

In the fashion sector, and especially in high fashion, details have acquired a crucial value in recent decades. This happens not only to increase the intrinsic value of products but also, and above all, to give them a distinctive feature that allows consumers to associate them with a specific manufacturer, thereby reinforcing brand identification and customer loyalty.

Footwear is certainly a type of clothing that lends itself to these considerations: intricate decorations, original shapes, or extravagant heels are now commonplace.

For example, reference can be made to the document EP3815892, which describes a two-tone outer sole that, beyond the technical innovation it represents, provides an unmistakable signature to the plastic soles of the company holding the patent.

However, while that company has pioneered a solution for plastic soles, no equivalent solution currently exists for leather soles.

KR 200 469 584 Y1 discloses a method of making a shoe sole.

The need to add color accents to footwear is widely recognized, particularly in the heel and the leatherette, which is the outer edge of the sole, to match shoes with the rest of an outfit and to harmonize the sole with the shoe itself.

Currently, the coloring of the leatherette and heel of leather soles is performed manually by spraying a polyurethane-based compound with an airbrush or by applying it over the entire surface using a fine brush or sponge.

To achieve a satisfactory result, this process requires great care, and the necessity of manual execution significantly slows down the production cycle. Furthermore, its aesthetic effect is unsatisfactory, as over time, the color fades, revealing streaks or darker patches.

There are also cases where leather is combined with thermoplastic material through an injection process: for example, to create "islands" of plastic material on the bottom surface of the sole to reduce slipping probability due to the smoothness of the leather's "grain" side, a recessed area is milled into the leather and then filled with thermoplastic material through an injection mould, using a through-hole made on the "flesh" side of the sole.

A similar process is used to produce a heel tip partially in leather and partially in thermoplastic material, which is then attached to the heel before manually coloring the leatherette of sole and heel in the aforementioned ways.

In other cases, a monoblock sole made entirely of plastic material, such as TPU, comprising a leather insert, can be obtained through an injection mould while ensuring that TPU does not infiltrate the space occupied by the preloaded leather.

Finally, there are bi-material soles made of leather and thermoplastic material, where the leather forms the outer edge of the sole and is preloaded into a mould, coated with mastic on the inner face, while the thermoplastic material is injected in one or two steps, depending on whether it is intended to fill only the internal volume of the sole or also form the lower tread, that alternatively, may also be manually glued to the sole after molding.

The purpose of the present invention is therefore to eliminate the aforementioned drawbacks.

The invention, as characterized by the claims, achieves this purpose through a method that allows the creation of a colored leatherette by injecting thermoplastic material, such as TPU.

The primary advantage of this invention is that it allows for the production of a colored leatherette in thermoplastic material, permanently and securely associated with a fully leather sole.

Additionally, the molding technique employed does not slow down the production cycle, allowing the soles to be manufactured more quickly with respect to the manual process.

Further advantages and characteristics of the invention will be more apparent from the detailed description below, made with reference to the attached drawings, which represent a non-limiting embodiment, wherein:

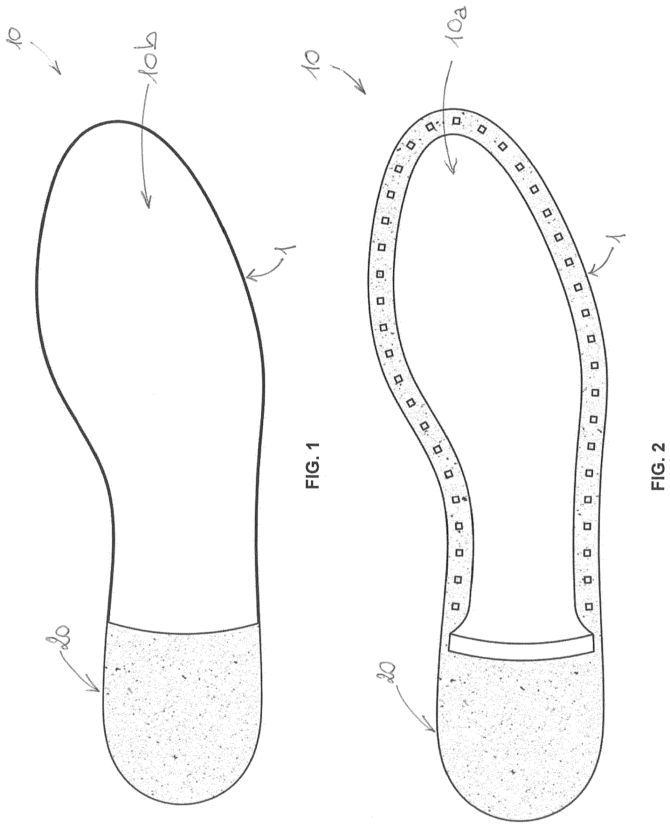

- Figure 1 shows the invention in a bottom plan view;
- Figure 2 shows the invention in a top plan view;

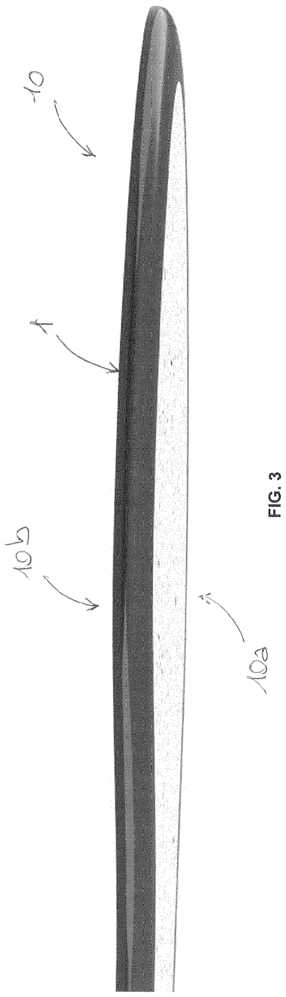

- Figure 3 shows a detail of the invention in a side view;
- Figure 4 shows the invention in a top plan view during an initial stage of the manufacturing process;
- Figure 5 shows the invention in a bottom plan view during an initial stage of the manufacturing process;
- Figure 6 shows the invention of Figure 4 in a perspective view;
- Figures 7 and 8 show a step of the manufacturing process in a top plan view;
- Figures 9 and 10 show, respectively, a partial perspective view and a sectional side view of an embodiment of the invention;
- Figures 11 and 12 show, respectively, a partial perspective view and a sectional side view of an alternative embodiment of the invention.

As can be observed in the figures, the invention concerns a leather sole (10), in which a "flesh" side (10a) and a "flower" side (10b) are distinguished, with a colored leatherette (1) in thermoplastic material and the method used to obtain it.

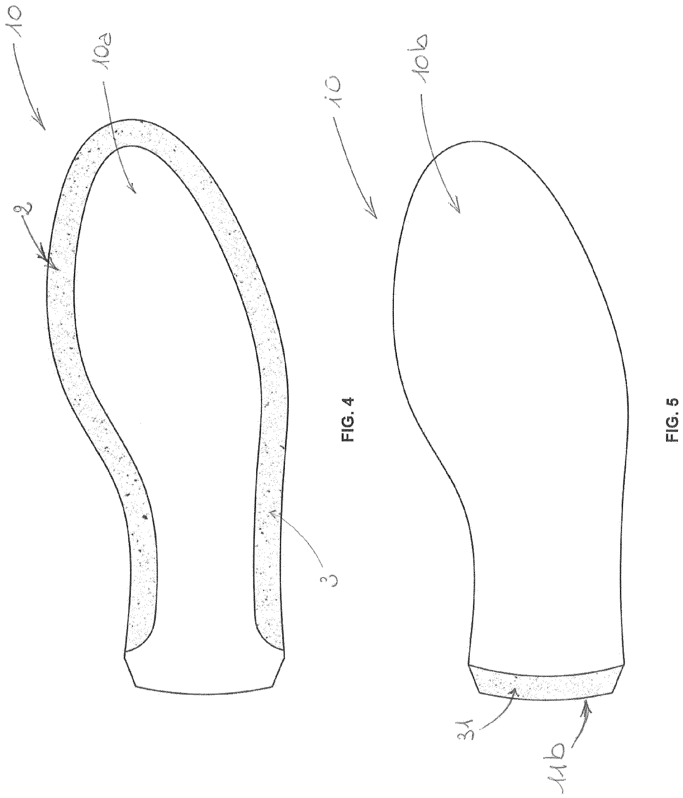

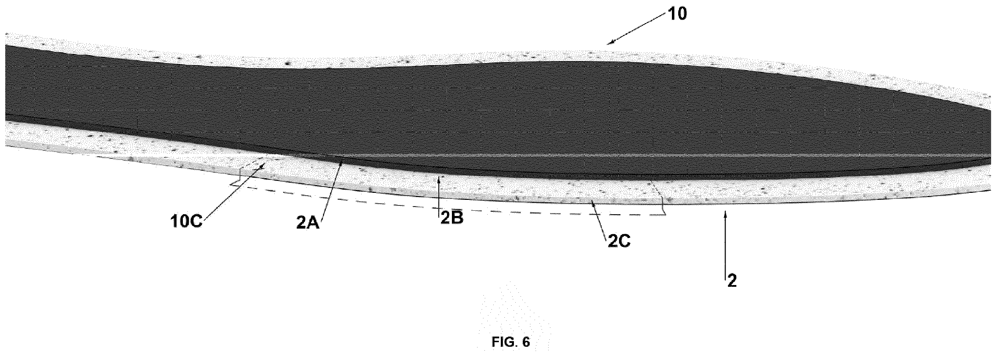

The method comprises a preliminary step in which the leather sole (10) is milled to form a shape complementary to a thermoplastic material injection mould (S). As shown in Figures 4 and 6, a peripheral dig (2) is then made on the "flesh" side (10a) of the sole (10), allowing the formation of a kind of step by removing the material (10c), represented by dashed lines in Figure 6; an adhesive material layer (3), preferably mastic, is then applied to the three faces (2a, 2b, 2c) of the dig (2) to facilitate the attachment of the leatherette (1) in thermoplastic material to the sole (10).

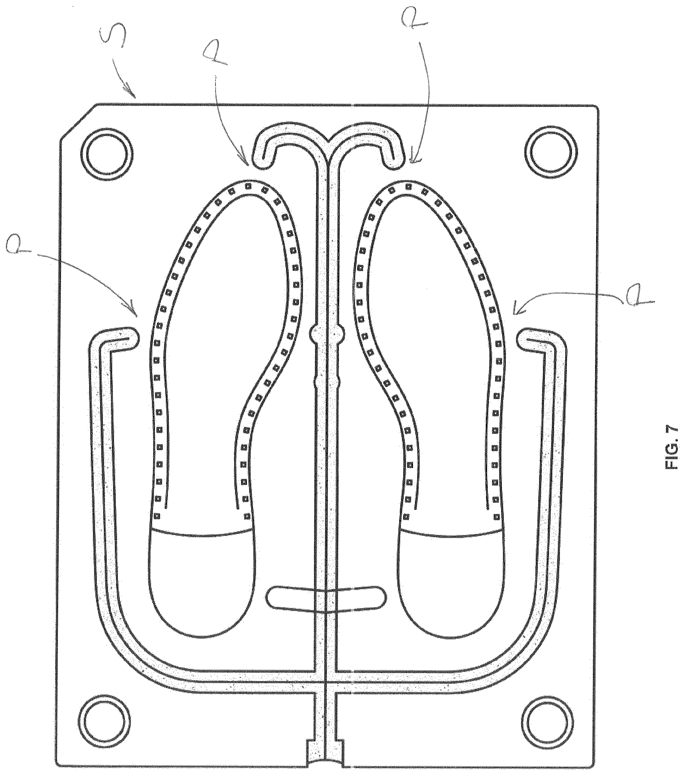

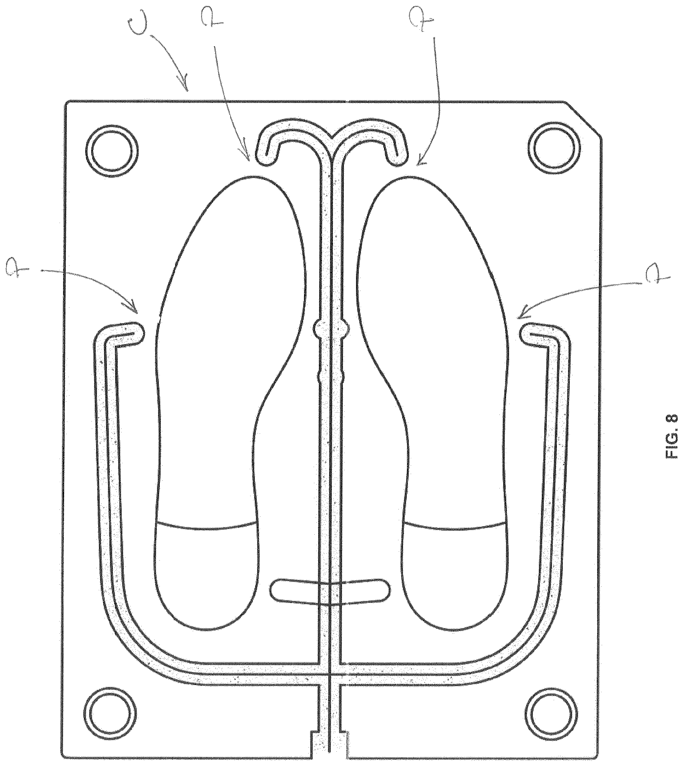

The sole (10) is then loaded and centered in the mould (S), a counter-mould (C) complementary to the mould (S) is closed onto it, and a thermoplastic material is injected in correspondence of at least one point (P) of delivery: however, as it can be seen in the example shown in Figures 7 and 8, it is preferable for the thermoplastic material to be injected through multiple points of delivery to ensure that the pressure of a single jet, at temperatures between 150 and 250°C, does not create concentrated stress on a single point of the sole (10). After injecting the thermoplastic material, following a waiting time of a few minutes, the counter-mould (C) is reopened, and the sole (10) is extracted. A heel (20) can then be joined to the obtained sole (10).

The heel (20) can also be made as a single piece with the sole (10), consequently sharing the same coloration as the leatherette (1) of the sole (10). In this case, as shown in Figure 5, it is necessary to card a back portion (11b) of the "flower" side (10b) of the sole (10) and lay a second adhesive layer (31) on the back portion (11b) before loading and centering the sole (10) in the mould (S), so as to obtain the coloured leatherette (1) even on a heel (20).

Through the described method, a leather sole (10) is obtained, in which a "flesh" side (10a) and a "flower" side (10b) are distinguished, comprising a peripheral dig (2) on the "flesh" side (10a) in the form of a step, covered on three faces (2a, 2b, 2c) by an adhesive material layer (3) and a leatherette (1) in thermoplastic material covering the dig (2). In a preferred embodiment, as represented in the figures, the sole (10) comprises a back portion (11b) of the "flower" side (10b) of the sole (10) covered by a second adhesive material layer (31) and a heel (20) in thermoplastic material, entirely or partially colored like the leatherette (1) of the sole (10).

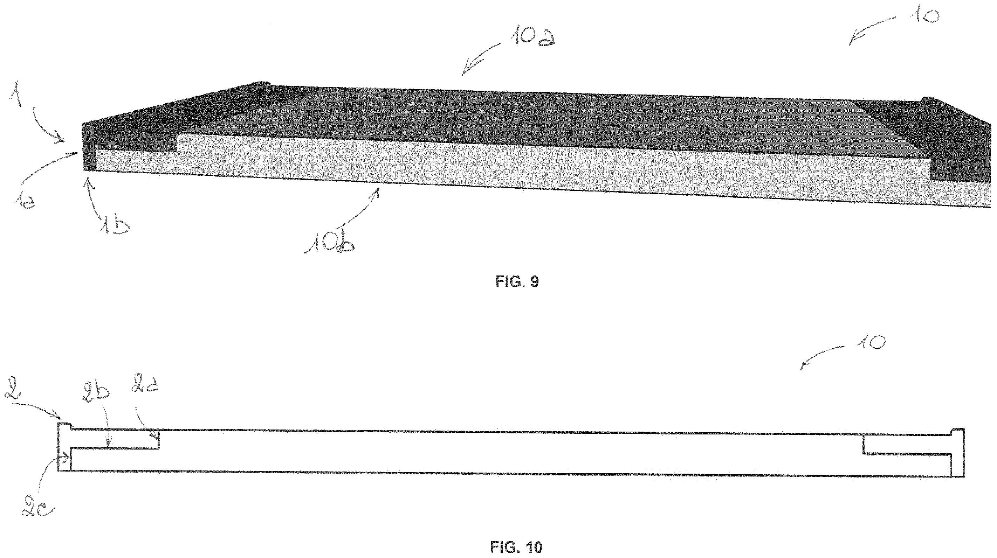

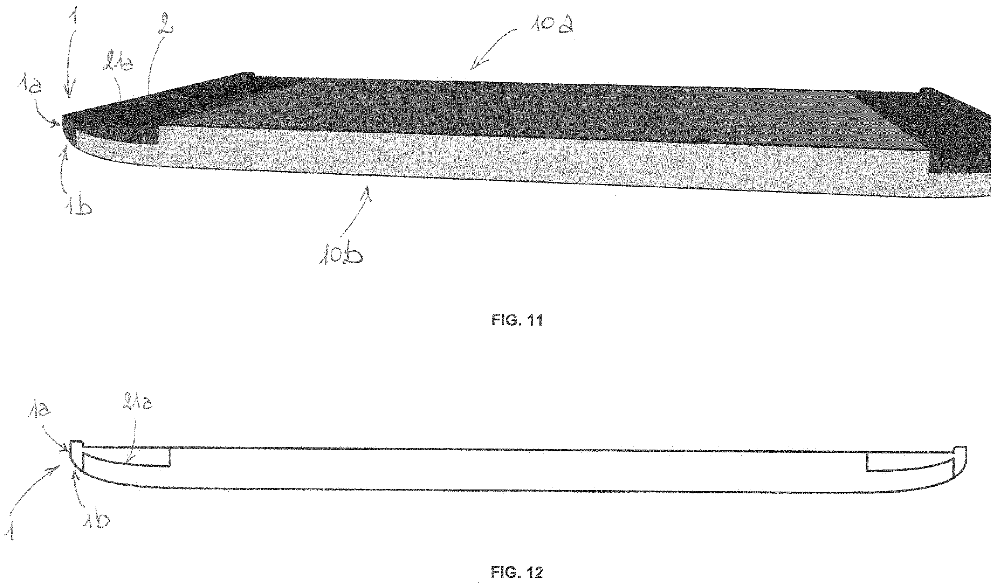

The dig (2) can have different shapes: for example, in Figures 9 and 10, a sole (10) is shown where the dig (2), viewed in section, comprises three faces (2a, 2b, 2c) arranged perpendicularly, while in Figures 11 and 12, the dig (2), viewed in section, comprises at least one curved portion (21a).

To preserve the aesthetic effect of the footwear, the leatherette (1) preferably has a height (1a) of less than 10 millimeters that, in particular situations, can be less than 5 millimeters.

Preferably, to preserve the aesthetic effect of the footwear, the leatherette (1) has a thickness (1b) on the "flower" side (10b) of less than 3 millimeters.

## Claims

1. Method of making of a coloured leatherette on a leather sole by injection, wherein a "flesh" side (10a) and a "flower" side (10b) are distinguished, comprising a preliminary step of milling the leather sole (10) in a form that is complementary to a thermoplastic material injection mould (S), comprising at least the steps of:
- making a dig (2) on the peripheral "flesh" side (10a) of the sole (10);
- laying a layer (3) of adhesive material on the dig (2);
- loading and centering the sole (10) in the mould (S);
- closing a counter-mould (C) on the mould (S);
- injecting a thermoplastic material in correspondence of at least one point (P) of delivery;
- reopening the mould (C) and removing the sole (10).

2. Method according to claim 1, **characterised by** comprising a step of joining a heel (20) to the sole (10).

3. Method according to claim 1, **characterised by** comprising the steps of:
- carding a back portion (11b) of the "flower" side (10b) of the sole (10);
- laying a second layer (31) of adhesive material on the back portion (11b); said steps preceding the step of loading and centering the sole (10) in the mould (S), so as to obtain the coloured leatherette (1) even on a heel (20).

4. Method according to claim 1 or 3, **characterized in that** the thermoplastic material is injected into a plurality of points (P) of delivery.

5. Leather sole, wherein one "flesh" side (10a) and one "flower" side (10b) are distinguished, **characterised by** comprising a dig (2) on the "flesh" side (10a) covered by a layer (3) of adhesive material and a leatherette (1) in thermoplastic material covering the dig (2).

6. Sole according to claim 5, **characterized by** comprising a rear portion (11b) of the "flower" side (10b) of the sole (10) covered by a second layer (31) of adhesive material and a heel (20) of thermoplastic material.

7. Sole according to claim 5 or 6, **characterized in that** the dig (2) comprises at least one curved portion (21a).

8. Sole according to claim 5 or 6 or 7, **characterised in that** the leatherette (1) is less than 10 millimetres high (1a).

9. Sole according to claim 5 or 6 or 7 or 8, **characterized in that** the leatherette (1) has a thickness (1b) on the "flower" side (10b) that is less than 3 millimeters.

## Patentansprüche

1. Verfahren zur Herstellung einer farbigen "Lissa" an einer Ledersohle durch Einspritzen, wobei zwischen einer "Fleischseite" (10a) und einer "Haarseite" (106) unterschieden wird, einen Vorbereitungsschritt des Fräsens der Ledersohle (10) in eine Form, die komplementär zu einer Spritzgussform für thermoplastisches Material (S) ist, beinhaltend, das dabei mindestens folgende Schritte beinhaltet:
- eine Abtragung (2) an der äußeren "Fleischseite" (10a) der Sohle (10) durchzuführen;
- eine Schicht (3) Klebstoff auf die Abtragung (2) aufzutragen;
- die Sohle (10) in die Form (S) einzulegen und zu zentrieren;
- eine Gegenform (C) auf der Form (S) zu schließen;
- ein thermoplastisches Material an der Stelle mindestens eines Einbringungspunkts (P) einzuspritzen;
- die Form (C) wieder zu öffnen und die Sohle (10) zu entfernen.

2. Verfahren nach dem Patentanspruch 1, **dadurch gekennzeichnet, dass** es einen Schritt des Anbringens eines Absatzes (20) an der Sohle (10) beinhaltet.

3. Verfahren nach dem Patentanspruch 1, **dadurch gekennzeichnet, dass** es dabei folgende Schritte beinhaltet:
- Kardieren eines rückwärtigen Abschnitts (11b) der "Haarseite" (10b) der Sohle (10);
- Auftragen einer zweiten Schicht (31) Klebstoff auf dem rückwärtigen Abschnitt (11b); besagte Schritte erfolgen dabei vor dem Schritt des Einlegens und Zentrierens der Sohle (10) in der Form (S), um die farbige "Lissa" (1) sogar an einem Absatz (20) zu erhalten.

4. Verfahren nach dem Patentanspruch 1 oder 3, **dadurch gekennzeichnet, dass** das thermoplastische Material in eine Vielzahl von Einbringungspunkten (P) eingespritzt wird.

5. Ledersohle, bei der zwischen einer "Fleischseite" (10a) und einer "Haarseite" (10b) unterschieden wird, **dadurch gekennzeichnet, dass** sie dabei auf der "Fleischseite" (10a) eine Abtragung (2), die von einer Schicht (3) Klebstoff bedeckt ist, und eine "Lissa" (1) aus thermoplastischem Material, die die Abtragung (2) bedeckt, beinhaltet.

6. Sohle nach dem Patentanspruch 5, **dadurch gekennzeichnet, dass** sie einen rückwärtigen Abschnitt (11b) der "Haarseite" (106) der Sohle (10), die von einer zweiten Schicht (31) Klebstoff bedeckt ist, und einen Absatz (20) aus thermoplastischem Material beinhaltet.

7. Sohle nach dem Patentanspruch 5 oder 6, **dadurch gekennzeichnet, dass** die Abtragung (2) mindestens einen gewölbten Abschnitt (21a) hat.

8. Sohle nach dem Patentanspruch 5 oder 6 oder 7, **dadurch gekennzeichnet, dass** die "Lissa" (1) weniger als 10 Millimeter hoch (1a) ist.

9. Sohle nach dem Patentanspruch 5 oder 6 oder 7 oder 8, **dadurch gekennzeichnet, dass** die "Lissa" (1) auf der "Haarseite" (106) eine Dicke (1b) hat, die weniger als 3 Millimeter beträgt.

## Revendications

1. Procédé de fabrication d'une lisse colorée sur une semelle en cuir par injection, dans lequel un côté « chair » (10a) et un côté « fleur » (10b) sont distingués, comprenant une étape préliminaire consistant à fraiser la semelle en cuir (10) dans une forme qui est complémentaire à un moule (S) d'injection de matière thermoplastique, comprenant au moins les étapes consistant à :
- réaliser un évidement (2) sur le côté « chair » (10a) périphérique de la semelle (10) ;
- étaler une couche (3) de matériau adhésif sur l'évidement (2) ;
- charger et centrer la semelle (10) dans le moule (S) ;
- fermer un contre-moule (C) sur le moule (S) ;
- injecter une matière thermoplastique au niveau d'au moins un point (P) de distribution ;
- rouvrir le moule (C) et retirer la semelle (10).

2. Procédé selon la revendication 1, **caractérisé en ce qu'**il comprend une étape consistant à unir un talon (20) à la semelle (10).

3. Procédé selon la revendication 1, **caractérisé en ce qu'**il comprend les étapes consistant à :
- carder une portion arrière (11b) du côté « fleur » (10b) de la semelle (10) ;
- étaler une deuxième couche (31) de matériau adhésif sur la portion arrière (11b) ; lesdites étapes précédant l'étape de chargement et de centrage de la semelle (10) dans le moule (S), de manière à obtenir la lisse colorée (1) également sur un talon (20).

4. Procédé selon la revendication 1 ou 3, **caractérisé en ce que** la matière thermoplastique est injectée dans une pluralité de points (P) de distribution.

5. Semelle en cuir, dans laquelle un côté « chair » (10a) et un côté « fleur » (10b) sont distingués, **caractérisée en ce qu'**elle comprend un évidement (2) sur le côté « chair » (10a) recouvert d'une couche (3) de matériau adhésif et une lisse (1) en matière thermoplastique recouvrant l'évidement (2).

6. Semelle selon la revendication 5, **caractérisée en ce qu'**elle comprend une portion arrière (11b) du côté « fleur » (10b) de la semelle (10) recouverte d'une deuxième couche (31) de matériau adhésif et un talon (20) de matière thermoplastique.

7. Semelle selon la revendication 5 ou 6, **caractérisée en ce que** l'évidement (2) comprend au moins une portion incurvée (21a).

8. Semelle selon la revendication 5 ou 6 ou 7, **caractérisée en ce que** la lisse (1) a une hauteur (1a) inférieure à 10 millimètres.

9. Semelle selon la revendication 5 ou 6 ou 7 ou 8, **caractérisée en ce que** la lisse (1) a une épaisseur (lb) du côté « fleur » (10b) qui est inférieure à 3 millimètres.
